# EUROPÄISCHE PATENTSCHRIFT

(11) **EP 1 750 524 B1**
(45) Veröffentlichungstag und Bekanntmachung des Hinweises auf die Patenterteilung: **26.09.2007**
(21) Anmeldenummer: 05752521.4
(22) Anmeldetag: 25.05.2005
(51) Int. Cl.: A23L 1/216, C08L 83/04, C08J 3/03, B01D 19/04, C08G 77/04

(54) **VERFAHREN ZUR REDUZIERUNG DES SCHÄUMENS BEI DER WÄSSRIGEN KARTOFFELVERARBEITUNG**
METHOD FOR REDUCING FOAM-FORMATION DURING THE PROCESS OF POTATOES IN WATER
PROCEDE PERMETTANT DE REDUIRE LA MOUSSE LORS DU TRAITEMENT DE POMMES DE TERRE DANS L'EAU

(30) Priorität: 03.06.2004 DE 102004027129
(43) Veröffentlichungstag der Anmeldung: 14.02.2007
(73) Patentinhaber: Wacker Chemie GmbH, 81737 München (DE)
(72) Erfinder: STRAUBINGER, Bernhard, 84539 Zangberg (DE); BACHMEIER, Bernd-Josef, 84533 Haiming (DE)
(74) Vertreter: Deffner-Lehner, Maria
(86) Internationale Anmeldenummer: PCT/EP2005/005665
(87) Internationale Veröffentlichungsnummer: WO 2005/117611

(56) Entgegenhaltungen:
- EP-A- 0 377 185
- EP-A- 1 004 338
- WO-A-98/00216
- DE-A1- 4 104 330

## Beschreibung

Die Erfindung betrifft ein Verfahren zur Reduzierung des Schäumens bei der wässrigen Kartoffelverarbeitung durch Zugabe eines Antischaummittels. Weiterhin betrifft die Erfindung ein Verfahren zur Herstellung eines Antischaummittels und das Antischaummittel selbst.

Die meisten Prozesse der Kartoffelverarbeitung beginnen damit, dass die Kartoffeln zunächst einen Waschprozess durchlaufen. Üblicherweise werden die Kartoffeln anschließend aufgeschlossen, was z.B. durch einen Schälprozess geschehen kann. Anschließend werden - z.B. für die Kartoffelchipherstellung - die Kartoffeln in Scheiben geschnitten.

Auch für die Herstellung von sterilisierten Kartoffelprodukten, wie Konserven, bei der Herstellung von Kartoffelpüree und für die Gewinnung von Kartoffelstärke muss ein Schälprozess samt Waschschritten, welche von Schaumbildung begleitet sind, durchgeführt werden.

Diese Prozessschritte, speziell die Waschschritte, bedürfen des massiven Einsatzes von Wasser. Hierbei kommt es zu Schaumproblemen: Bei den Aufschlussschritten werden oberflächenaktive Substanzen wie Proteine, Peptide, Zucker, Lipide und andere Verbindungen aus dem Kartoffelfruchtfleisch und den Kartoffelschalen freigesetzt. Diese Stoffe können die Oberflächenspannung des Waschwassers verringern, was wesentlich zur Schaumbildung beiträgt. Diese Schaumbildung kann den Prozessablauf in der Kartoffelverarbeitung erheblich beeinträchtigen, z.B. durch störendes Überschäumen in den einzelnen Prozessabschnitten oder auch durch Leerlaufen von Pumpen aufgrund von Schaum-, bzw. Luftansaugung.

Der Einfluss von proteinhaltigen Bestandteilen auf das Schaumverhalten in wässrigen Systemen ist bekannt.

Um dieses Problem einzudämmen, versuchte man bislang mit verschiedenen Antischaummitteln, also mit chemischen Mitteln, die Schaumbildung in diesen Waschschritten zu regulieren. Man setzt zu diesem Zweck beispielsweise organische und in geringerem Umfang gelegentlich auch siliconhaltige Antischaummittel ein. Die siliconhaltigen Antischaummittel wurden im System der Kartoffelverarbeitung bereits früh in der Literatur von S. Winkler, "Die Stärke", Nr. 7/7. Jahrg., 177-180, (1955), und K. Siebert, "Ernährungsforschung", 2, 127-142, (1957) beschrieben.

Dieses proteinbasierende Schaumsystem, basierend auf der Verarbeitung on Kartoffeln, wurde über die Jahre wiederholt untersucht, wobei die jüngsten Ergebnisse zur Natur der Schäume in der kartoffelverarbeitenden Technik von Christiano et al., Ind. Microbiol. Biotechnol. 30: 13-21, (2003) dargestellt wurden.

Üblicherweise werden derzeit in der kartoffelverarbeitenden Industrie vorwiegend organische Antischaummittel eingesetzt. Diese organischen Antischaummittel, die üblicherweise auf Fettsäuren, Fettsäureestern, Fettsäurederivaten und/oder polyglycolbasierenden Antischaummittel basieren, haben aber zum einen den Nachteil, dass sie von tierischen oder auch pflanzlichen Fetten abgeleitet sein können, wodurch eine problematische Querbeziehung zur BSE-/TSE-Problematik (Bovine Spongiforme Enzephalitis, Transmissible Spongiforme Enzephalitis) gegeben ist. Bei den pflanzlichen Fetten wiederum kann man nicht ausschließen, dass diese auch von genetisch modifiziertem Pflanzenmaterial (GMO/GVO = Genetically Modified Organism(s)/Genetisch veränderte Organismen) hergeleitet sind, was häufig, speziell in EU-Ländern, zu regulatorischen Komplikationen führt.
Von der technischen Seite besteht weiterhin bei den organischen Antischaummitteln die Problematik, dass die organischen Entschäumer in der raschen Schaumniederschlagung, also dem sog. "knock-down"-Verhalten, nicht schnell und anhaltend genug wirken.

Die siliconhaltigen Antischaummittel, die derzeit in einem geringeren Maße in der Kartoffel- und Lebensmittelverarbeitung eingesetzt werden, werden vornehmlich in der Form von Antischaummittel-Emulsionen eingesetzt. Diese zeigen zwar eine gute Kurzzeitwirkung, also einen guten "knock-down"-Effekt, haben aber in diesem protein- und stärkereichen System wiederum keine ausreichende Entschäumer-Langzeitwirkung.

Es bestand die Aufgabe, siliconhaltige Antischaummittel bereitzustellen, welche sowohl eine gute Kurzzeitwirkung, also einen guten "knock-down"-Effekt, zeigen und darüber hinaus auch eine anhaltende Entschäumer-Langzeitwirkung aufweisen. Weiterhin bestand die Aufgabe, siliconhaltige Antischaummittel bereitzustellen, bei denen alle Komponenten so gewählt werden, dass keinerlei BSE-/TSE-Problematik und/oder Komplikationen bezüglich genetisch modifiziertem Pflanzenmaterials (GMO/GVO) gegeben war. Weiterhin bestand die Aufgabe, siliconhaltige Antischaummittel bereitzustellen, die ausschließlich aus Bestandteilen aufgebaut sind, welche als Lebensmitteladditive, insbesondere in der EU, zugelassen sind.

Gegenstand der Erfindung ist ein Verfahren zur Reduzierung des Schäumens bei der wässrigen Kartoffelverarbeitung durch Zugabe von siliconhaltigen Antischaummitteln hergestellt indem in einem ersten Schritt
eine Mischung aus
90 -99 Gew.-% linearen Diorganopolysiloxanen (1) mit einer Viskosität von 100 bis 10 000 mPa·s bei 25°C, vorzugsweise 300 bis 1050 mPa·s bei 25°C,
1 - 10 Gew.-% Kieselsäuren (2)
erhitzt wird und mit
Emulgator (3) und
Wasser (4)
vermischt und emulgiert wird und
in einem zweiten Schritt
zu der im ersten Schritt erhaltenen Antischaummittelemulsion (5) niedrigviskose Diorganopolysiloxane (6) mit einer Viskosität von 100 bis 1050 mPa·s bei 25°C, vorzugsweise 300 bis 500 mPa·s bei 25°C, in solchen Mengen zugegeben werden, dass das Verhältnis von Mischung aus (1) und (2) zu niedrigviskosem Diorganopolysiloxan (6) 1 : 0,01 bis 1 : 3,0 beträgt.

Unter dem Begriff wässrige Kartoffelverarbeitung sind alle solche Prozesse oder Verfahren bei der Kartoffelverarbeitung zu verstehen, bei denen Wasser eingesetzt wird, wo es sich also um Kartoffel-Wasser-Gemische, auch wässrige Kartoffelpulpe genannt, handelt. Beispiele hierfür sind das Waschen von Kartoffeln, das Aufschließen von Kartoffeln, wie das Schälen von Kartoffeln, das Zerkleinern von Kartoffeln, wie das Schneiden in Scheiben, die Herstellung von Kartoffelchips, die Herstellung von sterilisierten Kartoffelprodukten, wie Konserven, die Herstellung von Kartoffelpüree und die Gewinnung von Kartoffelstärke, die Gewinnung und Herstellung von Derivaten, die von Kartoffelstärke abgeleitet sind.

Das erfindungsgemäße siliconhaltige Antischaummittel wird bei der wässrigen Kartoffelverarbeitung vorzugsweise in Mengen von 0,001 bis 1,0 Gew.-%, bevorzugt 0,01 bis 0,50 Gew.-%, bezogen auf das zu entschäumende Kartoffel-Wasser-Gemisch, zugesetzt.

Bevorzugt werden als Diorganopolysiloxane (1) solche der allgemeinen Formel

R₃SiO(R₂SiO)ₙSiR₃ (I),

wobei R einen einwertigen Kohlenwasserstoffrest mit 1 bis 18 Kohlenstoffatomen je Rest und
n eine ganze Zahl von 70 bis 500 bedeutet, eingesetzt.

Innerhalb bzw. entlang der Siloxankette der Diorganopolysiloxane der oben angegebenen Formel (I) können, was durch derartige Formeln üblicherweise nicht dargestellt wird, zusätzlich zu den Diorganosiloxaneinheiten R₂SiO noch andere Siloxaneinheiten vorliegen. Beispiele für solche anderen, meist nur als Verunreinigung vorliegenden Siloxaneinheiten sind solche der Formeln RSiO_{3/2}, R₃SiO_{1/2} und SiO₂, wobei R die oben dafür angegebene Bedeutung hat.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.
Bevorzugt ist R ein Methylrest.
Vorzugsweise werden daher als Diorganopolysiloxane (1) Dimethylpolysiloxane eingesetzt. Bevorzugt werden dabei als Lebensmittelzusätze geeignete Dimethylpolysiloxane eingesetzt.

Es kann eine Art von Diorganopolysiloxan (1) oder mehrere Arten von Diorganopolysiloxanen (1) eingesetzt werden. Vorzugsweise wird eine Mischung von Diorganopolysiloxanen (1) im Viskositätsbereich von 100 bis 10 000 mPa·s bei 25°C eingesetzt.

Als Kieselsäuren (2) werden vorzugsweise pyrogen hergestellte Kieselsäuren oder gefällte Kieselsäuren mit einer BET-Oberfläche von mehr als 50 m²/g eingesetzt. Bevorzugt werden nicht-hydrophobierte Kieselsäuren eingesetzt.

Besonders bevorzugt werden als Lebensmittelzusätze geeignete Kieselsäuren (2) eingesetzt.

Es kann eine Art von Kieselsäure (2) oder mehrere Arten von Kieselsäuren (2) eingesetzt werden. Vorzugsweise wird eine Mischung von Kieselsäuren (2) eingesetzt, d.h. dass insbesondere mehrere nicht-hydrophobierte Kieselsäuren als Gemisch verwendet werden können.

Die Mischung aus Diorganopolysiloxanen (1) und Kieselsäuren (2) wird vorzugsweise auf 100 - 200°C erhitzt.

Nach dem Hitzeschritt wird dann die Mischung aus (1) und (2), das sogenannte Antischaummittelcompound, mit Wasser (4) und Emulgatoren (3) vermischt und emulgiert. Vorzugsweise wird eine Emulgatoren-Wasser-Mischung vorgelegt und das sogenannte Antischaummittelcompound aus (1) und (2) darin eingearbeitet und emulgiert.

Vorzugsweise werden als Emulgatoren (3) nur solche eingesetzt, die als Lebensmittelzusätze geeignet sind, d.h. sogenannte E-Nummern haben.

Beispiele für Emulgatoren (3) sind daher
Polyoxyethylen(40)stearat, E 431
Polyoxyethylen-sorbitan-monolaurat (Polysorbate 20), E 432
Polyoxyethylen-sorbitan-monooleat (Polysorbate 80), E 433
Polyoxyethylen-sorbitan-monopalmitat (Polysorbate 40), E 434
Polyoxyethylen-sorbitan-monostearat (Polysorbate 60), E 435
Polyoxyethylen-sorbitan-tristearat (Polysorbate 65), E 436
Sorbitanmonostearat, E 491
Sorbitantristearat, E 492
Sorbitanmonolaurat, E 493
Sorbitanmonooleat, E 494
Sorbitanmonopalmitat, E 495
Cellulose, E 460
Methylcellulose, E 461
Hydroxypropylcellulose, E 463
Hydroxyprpylmethylcellulose, E 464
Ethylmethylcellulose, E 465
Carboxymethylcellulose, Natriumcarboxymethylcellulose, E 466
Na-, K- und Ca-Salze von Speisefettsäuren, E 470a
Mg-Salze von Speisefettsäuren, E 470b
Mono-und Diglyceride von Speisefettsäuren, E 471
Zuckerester von Speisefettsäuren, E 473
Zuckerglyceride, E 474
Polyglycerinester von Speisefettsäuren, E 475
Propylenglycolester von Speisefettsäuren, E 477
Agar-Agar, E 406
Johannisbrotkernmehl, E 410
Guarkernmehl, E 412
Gummi arabicum, E 414
Xanthan, E 415.

Bevorzugte Beispiele für Emulgatoren (3) sind Polyoxyethylen-sorbitan-monostearat (Polysorbate 60), E 435 Polyoxyethylen-sorbitan-monooleat (Polysorbate 80), E 433 Sorbitanmonostearat, E 491 und
Methylcellulose, E 461.
Bevorzugt wird eine Mischung aus diesen Emulgatoren eingesetzt.

Beispiele für weitere Emulgatoren sind als Lebensmittelzusatz geeignete Emulgatoren, wie Naturstoffe und deren Derivate, wie Lecithin, hydroxyliertes Lecithin, Lanolin, Saponine, Kalium-, Calcium-, Magnesiumstearat, Fettsäuren, Ölsäuren (abgeleitet von Talg- und Fettsäuren), Oxystearin, Propylenglycol-mono- und -diester von Fetten und Fettsäuren, Fettsäuren aus Sojaöl (hydroxyliert), Talg (hydrogeniert, oxidiert oder sulfoniert) und Talgalkohol (hydrogeniert).

Im ersten Verfahrensschritt werden die Emulgatoren vorzugsweise in Mengen von 0,01 bis 10,0 Gew.-%, bevorzugt 0,1 bis 6,0 Gew.-%, bezogen auf das Gesamtgewicht an Wasser (4), eingesetzt.

Im ersten Verfahrensschritt wird die Mischung aus (1) und (2), also das Antischaummittelcompound aus (1) und (2), vorzugsweise in Mengen von 1,0 bis 40,0 Gew.-%, bevorzugt 3,0 bis 35,0 Gew.-%, bezogen auf das Gesamtgewicht an Wasser (4), eingesetzt.

In einem zweiten Schritt werden zu der im ersten Verfahrensschritt erhaltenen Antischaummittelemulsion (5) vorzugsweise niedrigviskose Diorganopolysiloxane (6) der allgemeinen Formel (I) zugegeben, mit der Antischaummittelemulsion (5) vermischt und emulgiert. Vorzugsweise weisen die niedrigviskosen Diorganopolysiloxane (6) eine Viskosität von 300 - 500 mPa.s bei 25°C auf.

Vorzugsweise werden als Diorganopolysiloxane (6) Dimethylpolysiloxane eingesetzt. Bevorzugt werden dabei als Lebensmittelzusätze geeignete Dimethylpolysiloxane eingesetzt.

Es kann eine Art von niedrigviskosem Diorganopolysiloxan (6) oder mehrere Arten von niedrigviskosen Diorganopolysiloxanen (6) eingesetzt werden.

Im zweiten Verfahrensschritt wird das niedrigviskose Diorganopolysiloxane (6) bevorzugt in solchen Mengen eingesetzt, dass das Verhältnis von Mischung aus (1) und (2) zu niedrigviskosem Diorganopolysiloxan (6) 1 : 0,2 bis 1 : 2,0 bezogen auf das Gewicht, beträgt.

Beispiele für weitere Stoffe, die in der erfindungsgemäßen Antischaummittelemulsion enthalten sein können, sind Konservierungsstoffe, wie Sorbinsäure, Benzoesäure, PHB-Ester und deren abgeleitete Salze, die vorzugsweise als Lebensmittelzusätze geeignet sind,
Puffersubstanzen, Füllstoffe, Katalysatoren, Geruchsstoffe und Geschmacksstoffe, die ebenfalls vorzugsweise als Lebensmittelzusätze geeignet sind,

Vorzugsweise werden die Konservierungsstoffe im ersten Verfahrensschritt zugegeben, bevorzugt der vorgelegten Emulgatoren-Wasser-Mischung zugegeben.

Das Herstellen der erfindungsgemäßen Antischaummittel erfolgt nach bekannten Verfahren, beispielsweise unter Anwendung von hohen Scherkräften in Kolloidmühlen oder Rotor-Stator-Homogenisatoren. Dabei kann der Mischvorgang bei reduziertem Druck erfolgen, um das Einmischen von Luft, welche in hochdispersen Füllstoffen enthalten ist, zu verhindern.

Im zweiten Verfahrensschritt kann weiteres Wasser zugegeben werden zur Einstellung der Endkonzentration der Komponenten.

Vorzugsweise sind die Komponenten (1), (2) und (6) in Mengen von 0,5 bis 40,0 Gew.-%, bevorzugt 3,0 bis 30,0 Gew.-%, bezogen auf das Gesamtgewicht der erfindungsgemäßen Antischaummittelemulsion enthalten.

Vorzugsweise sind die Emulgatoren (3) in Mengen von 0,01 bis 8,0 Gew.-%, bevorzugt 0,1 bis 6,0 Gew.-%, bezogen auf das Gesamtgewicht der erfindungsgemäßen Antischaummittelemulsion enthalten.

Vorzugsweise sind die weiteren Stoffe, bevorzugt Konservierungsstoffe, in Mengen von 0,01 bis 5,0 Gew.-%, bevorzugt 0,1 bis 3,0 Gew.-%, bezogen auf das Gesamtgewicht der erfindungsgemäßen Antischaummittelemulsion enthalten.

### Beispiele

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1020 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Herstellung des Antischaummittelcompounds aus (1) und (2)

Eine Mischung aus
94,5 Gew.-% Dimethylpolysiloxane (1) mit einer Viskosität von 1000 mPa·s bei 25°C,
1,1 Gew.-% pyrogen hergestellte Kieselsäure mit einer BET-Oberfläche von 200 m²/g und
4,4 Gew.-% gefällte Kieselsäure mit einer BET-Oberfläche von 160 m²/g
wird hergestellt, vermischt und homogenisiert. Anschließend wird die Mischung bei 150°C für 4 h erhitzt und nach Abkühlung das Antischaummittelcompound erhalten.

### Beispiel 1: Herstellung der erfindungsgemäßen Antischaummittelemulsion (nicht beansprucht)

Es werden 0,44 Gew.-% Sorbitanmonostearat, 0,15 Gew.-% "Polysorbate 60" und 0,59 Gew.-% "Polysorbate 80", jeweils bezogen auf das Gesamtgewicht an eingesetztem Wasser, auf 60°C erwärmt und mit Wasser voremulgiert. Bereits dieser Mischung wird der Konservierungsstoff Sorbinsäure in Mengen von 0,1 Gew.-% zugesetzt, um von Anfang an eine Kontrolle des Keimwachstums zu gewährleisten. Der Emulgator-Wasser-Mischung werden sodann 2,9 Gew.-% Methylcellulose zugegeben und die Mischung wird homogenisiert. In dieser Emulgator-Wasser-Mischung werden nun 7,4 Gew.-% des Antischaummittelcompounds aus (1) und (2), dessen Herstellung oben beschrieben ist, eingearbeitet. Anschließend werden in diese Antischaummittelemulsion (5) 12,6 Gew.-% des niedrigviskosen Dimethylpolysiloxans (6) mit einer Viskosität von 350 mPa·s eingearbeitet und ebenfalls gut homogenisiert. Zum Schluss wird mit Wasser auf die Endkonzentration von 24,2% Feststoffgehalt eingestellt.

### Vergleichsversuch 1:

Die Arbeitsweise von Beispiel 1 wurde wiederholt mit der Abänderung, dass das niedrigviskose Dimethylpolysiloxan (6) aus Beispiel 1 schon bei der Herstellung des Antischaummittelcompounds aus (1) und(2) eingesetzt wurde. Hierbei wurden 63,0 Gew.-% des Dimethylpolysiloxans (1) durch das niedrigviskose Dimethylpolysiloxan (6) ersetzt, so dass die Mengenverhältnisse von (1) und (6) in der Antischaummittelemulsion dieselben sind wie in Beispiel 1.
Die aus diesem Antischaummittelcompound hergestellte Emulsion zeigte schlechtere Entschäumerqualitäten, als die in Beispiel 1 beschriebene Entschäumeremulsion.

### Vergleichsversuch 2:

Die Arbeitsweise von Beispiel 1 wurde wiederholt mit der Abänderung, dass das Antischaummittelcompound aus (1) und (2) und das niedrigviskose Dimethylpolysiloxans (6) getrennt voneinander gemäß Beispiel 1 emulgiert wurden, so dass zwei Emulsionen erhalten werden. Anschließend wurden die beiden Emulsionen im Mengenverhältnis entsprechend dem Beispiel 1 gemischt.
Die so hergestellte Antischaummittelemulsion zeigte schlechtere Entschäumerqualitäten, als die in Beispiel 1 beschriebene Entschäumeremulsion.

### Vergleichsversuch 3:

Die Arbeitsweise von Beispiel 1 wurde wiederholt mit der Abänderung, dass das niedrigviskose Dimethylpolysiloxan (6) aus Beispiel 1 durch ein höherviskoses Dimethylpolysiloxan mit einer Viskosität von 2000 mPa·s ersetzt wurde.

Die so hergestellte Antischaummittelemulsion zeigte schlechtere Entschäumerqualitäten, als die in Beispiel 1 beschriebene Entschäumeremulsion.

### Vergleichsversuch 4:

Die Arbeitsweise von Beispiel 1 wurde wiederholt mit der Abänderung, dass das niedrigviskose Dimethylpolysiloxan (6) aus Beispiel 1 durch ein sehr niederviskoses Dimethylpolysiloxan mit einer Viskosität von 10 mPa·s ersetzt wurde.
Die so hergestellte Antischaummittelemulsion zeigte schlechtere Entschäumerqualitäten, als die in Beispiel 1 beschriebene Entschäumeremulsion.

### Beispiel 2: Entschäumung bei der Kartoffelverarbeitung

Die Kartoffeln (vorzugsweise Sorten, die für die Produktion von Kartoffelchips zum Einsatz kommen z. B. "Erntestolz", "Saturna", "Domensa") wurden zuerst mit Trinkwasser gewaschen, um Verschmutzungen zu entfernen. Sodann wurden die Kartoffeln zerteilt, um diese anschließend mit einer Bosch Küchenmaschine *Typ Profi* 67 in dünne Scheiben zu schneiden. Die Kartoffelscheiben wurden gewogen und mit Trinkwasser auf einen Feststoffgehalt von 30 % gebracht. Dieses Gemisch wurde in einem "Ultra Turrax T 50" (Fa. IKA) mittels eines Grobdispergierwerkzeuges zerkleinert und anschließend über ein Nylonsieb (Maschenweite 125 µm) filtriert. Die so erhaltene Stärkesuspension wurde an einem Schaummessgerät "Contifoam" (Fa. Raab) mit einer Umpumprate von 200 1/h im Kreis gepumpt (Pumpe: Fa. Micropump Model 142-000-100). Verwendetes Testvolumen: 500 ml; eingesetzte Düse: 5 mm; Fallhöhe 430 mm; Arbeitstemperatur 25°C).
Die erfindungsgemäße Antischaummittelemulsion gemäß Beispiel 1 und die Antischaummittelemulsionen gemäß Vergleichsversuch 1 bis 4 wurden jeweils mit einer Dosierung von 0,085 Gew.-% (bezogen auf den Wirkstoffgehalt) zugegeben. Das beim Umpumpen erhaltene Schaumprofil wurde in 1/h dokumentiert. Die Ergebnisse sind in der Tabelle zusammengefasst.
Die Schaumhöhe konnte durch den Einsatz der erfindungsgemäßen Antischaummittelemulsion deutlich besser als mit den Antischaummittelemulsionen gemäß Vergleichsversuch 1 bis 4 reduziert werden.
Die Langzeitentschäumerwirkung der erfindungsgemäßen Antischaummittelemulsion ist damit deutlich besser als die Langzeitentschäumerwirkung der Antischaummittelemulsionen gemäß Vergleichsversuch 1 bis 4.

**Tabelle:**

| **Entschäumer** | **Generiertes Schaumvolumen** | |
|---|---|---|
| Beispiel 1 | 41,15 | [l/h] |
| Vergleichsversuch 1 | 138,16 | [l/h] |
| Vergleichsversuch 2 | 91,54 | [l/h] |
| Vergleichsversuch 3 | 107,91 | [l/h] |
| Vergleichsversuch 4 | 152,78 | [l/h] |

## Patentansprüche

1. Verfahren zur Reduzierung des Schäumens bei der wässrigen Kartoffelverarbeitung durch Zugabe von siliconhaltigen Antischaummitteln hergestellt indem
in einem ersten Schritt
eine Mischung aus
90 -99 Gew.-% linearen Diorganopolysiloxanen (1) mit einer Viskosität von 100 bis 10000 mPa·s bei 25°C und
1 - 10 Gew.-% Kieselsäuren (2)
erhitzt wird und mit
Emulgator (3) und
Wasser (4)
vermischt und emulgiert wird und
in einem zweiten Schritt
zu der im ersten Schritt erhaltenen Antischaummittelemulsion (5) niedrigviskose Diorganopolysiloxane (6) mit einer Viskosität von 100 bis 1050 mPa·s bei 25°C in solchen Mengen zugegeben werden, dass das Verhältnis von Mischung aus (1) und (2) zu niedrigviskosem Diorganopolysiloxan (6) 1 : 0,01 bis 1 : 3,0, bezogen auf das Gewicht, beträgt.

2. Verfahren nach Anspruch 1, **dadurch gekennzeichnet, dass** als Diorganopolysiloxane (1) und (6) Dimethylpolysiloxane eingesetzt werden.

3. Verfahren nach Anspruch 1 oder 2, **dadurch gekennzeichnet, dass** Diorganopolysiloxane (1) mit einer Viskosität von 300 bis 1050 mPa·s bei 25°C eingesetzt werden.

4. Verfahren nach Anspruch 1, 2 oder 3, **dadurch gekennzeichnet, dass** niedrigviskose Diorganopolysiloxane (6) mit einer Viskosität von 300 bis 500 mPa·s bei 25°C eingesetzt werden.

5. Verfahren nach einem der Ansprüche 1 bis 4, **dadurch gekennzeichnet, dass** als Kieselsäuren (2) pyrogen hergestellte Kieselsäuren oder gefällte Kieselsäuren mit einer BET-Oberfläche von mehr als 50 m²/g eingesetzt werden.

6. Verfahren nach einem der Ansprüche 1 bis 5, **dadurch gekennzeichnet, dass** als Emulgatoren (3)
Polyoxyethylen-sorbitan-monostearat (Polysorbate 60),
Polyoxyethylen-sorbitan-monooleat (Polysorbate 80),
Sorbitanmonostearat, und
Methylcellulose,
und deren Mischungen eingesetzt werden.

## Claims

1. Method of reducing foam formation during the processing of potatoes in water by adding silicone-containing antifoaming agents prepared by heating, in a first step,
a mixture of
90-99% by weight linear diorganopolysiloxanes (1) having a viscosity of 100 to 10 000 mPa·s at 25°C and
1-10% by weight silicic acids (2)
and mixing it with
emulsifier (3) and
water (4)
and emulsifying it and,
in a second step,
to the antifoaming agent emulsion (5) obtained in the first step, adding low-viscosity diorganopolysiloxanes (6) having a viscosity of 100 to 1050 mPa·s at 25°C, in amounts such that the ratio of the mixture of (1) and (2) to low-viscosity diorganopolysiloxane (6) is 1:0.01 to 1:3.0, based on the weight.

2. Method according to Claim 1, **characterized in that** the diorganopolysiloxanes (1) and (6) used are dimethylpolysiloxanes.

3. Method according to Claim 1 or 2, **characterized in that** diorganopolysiloxanes (1) having a viscosity of 300 to 1050 mPa·s at 25°C are used.

4. Method according to Claim 1, 2 or 3, **characterized in that** low-viscosity diorganopolysiloxanes (6) having a viscosity of 300 to 500 mPa·s at 25°C are used.

5. Method according to one of Claims 1 to 4, **characterized in that** the silicic acids (2) used are pyrogenically produced silicic acids or precipitated silicic acids having a BET surface area of greater than 50 m²/g.

6. Method according to one of Claims 1 to 5,
**characterized in that** the emulsifiers (3) used are polyoxyethylene sorbitan monostearate (polysorbate 60),
polyoxyethylene sorbitan monooleate (polysorbate 80),
sorbitan monostearate, and
methylcellulose,
and mixtures thereof.

## Revendications

1. Procédé pour la réduction de la formation de mousse lors du traitement aqueux de pommes de terre, par addition d'antimousses siliconés préparés par
dans une première étape
chauffage d'un mélange de
90-99 % en poids de diorganopolysiloxanes linéaires (1) ayant une viscosité de 100 à 10 000 mPa.s à 25 °C et 1-10 % en poids d'acides siliciques (2) et
mélange et émulsion de celui-ci avec un émulsifiant (3) et
de l'eau (4) et
dans une seconde étape
addition à l'émulsion d'antimousse (5), obtenue dans la première étape, de diorganopolysiloxanes peu visqueux (6) ayant une viscosité de 100 à 1 050 mPa.s à 25 °C, en quantités telles que le rapport du mélange de (1) et (2) au diorganopolysiloxane (6) va de 1:0,01 à 1:3,0, rapporté au poids.

2. Procédé selon la revendication 1, **caractérisé en ce qu'**on utilise comme diorganopolysiloxanes (1) et (6) des diméthylpolysiloxanes.

3. Procédé selon la revendication 1 ou 2, **caractérisé en ce qu'**on utilise des diorganopolysiloxanes (1) ayant une viscosité de 300 à 1 050 mPa.s à 25 °C.

4. Procédé selon la revendication 1, 2 ou 3, **caractérisé en ce qu'**on utilise des diorganopolysiloxanes (6) peu visqueux ayant une viscosité de 300 à 500 mPa.s à 25 °C.

5. Procédé selon l'une quelconque des revendications 1 à 4, **caractérisé en ce qu'**on utilise comme acides siliciques (2) des acides siliciques produits par pyrogénation ou des acides siliciques précipités ayant une surface BET de plus de 50 m²/g.

6. Procédé selon l'une quelconque des revendications 1 à 5, **caractérisé en ce qu'**on utilise comme émulsifiants (3) du monostéarate polyoxyéthylénique de sorbitanne (Polysorbate 60), du mono-oléate polyoxyéthylénique de sorbitanne (Polysorbate 80), du monostéarate de sorbitanne et de la méthylcellulose, et
des mélanges de ceux-ci.
